# DEMANDE DE BREVET EUROPEEN

(11) **EP 2 824 443 A1**
(43) Date de publication de la demande: **14.01.2015**
(21) Numéro de dépôt: 13290161.2
(22) Date de dépôt: 12.07.2013
(51) Int. Cl.: G01N 21/27, G01N 21/35

(54) **Procédé de transfert entre spectromètres**

(71) Demandeur: Topnir Systems SAS, 13100 Aix en Provence (FR)
(72) Inventeur: La désignation de l'inventeur n'a pas encore été déposée
(74) Mandataire: De Kezel, Eric

(57) **Abrégé**

La présente invention concerne un procédé de caractérisation d'un échantillon-produit X par analyse spectrale au moyen d'un nouveau spectromètre II grâce à l'utilisation d'informations acquises au moyen d'un premier spectromètre I.

## Description

La présente invention concerne un procédé de caractérisation d'un échantillon-produit X par analyse spectrale au moyen d'un nouveau spectromètre II grâce à l'utilisation d'informations acquises au moyen d'un premier spectromètre I. La présente invention concerne également une méthode de transfert de la connaissance acquise au moyen d'un premier spectromètre I en vue d'utiliser un nouveau spectromètre II d'une manière nouvelle et plus efficace.

Il est connu de développer des fonctions de calibration de transfert entre spectromètres. Par exemple, M. Forina ("Transfer of calibration function in near-infrared spectroscopy", Chemometrics and Intelligent Laboratory Systems, Volume 27, Issue 2, February 1995, Pages 189-203) décrit un procédé pour le transfert de l'équation de régression en spectroscopie proche infrarouge (NIR), à partir d'un premier instrument vers un second instrument. Le procédé utilise à deux reprises des régressions au moyen de la technique des moindres carrés partiels (PLS): dans la première étape pour calculer le rapport entre les spectres des échantillons de transfert des deux instruments, et dans la deuxième étape pour calculer l'équation de régression (relation entre les variables et les variables spectrales chimiques) du premier instrument. Ces deux étapes PLS sont combinées pour prédire l'équation de régression du deuxième instrument.

Ce type de méthodologie développée dans l'art antérieur s'avère très lourd et pas nécessairement adapté à des situations particulières telles que le transfert de la connaissance acquise au moyen d'un premier spectromètre (par exemple un spectromètre de laboratoire couplé à un important dispositif informatique non transportable) vers un nouveau spectromètre (par exemple, un spectromètre portable et/ou un spectromètre couplé à un ordinateur portable et/ou une installation en ligne).

Un autre inconvénient lié aux méthodes de l'art antérieur réside dans la nécessité d'établir pour le nouveau spectromètre une nouvelle banque de données spectrales constituée à partir d'un nombre initial très important d'étalons; bien que l'art antérieur cite des constitutions de banque de données spectrales basées à partir d'au moins 60 ou au moins 100 étalons, la majorité des exemples décrivent des banques constituées d'un nombre d'étalons nettement supérieurs puisque les méthodes mathématiques régressives dont les banques de données sont issues nécessitent bien souvent des centaines ou même des milliers d'étalons. La présente invention permet de s'affranchir de cette exigence antérieure ce qui ouvre un nombre considérable de nouvelles applications comme démontré ci-après.

La Demanderesse a développé une méthode originale et efficace qui s'avère bien plus simple à mettre en oeuvre que les techniques de l'art antérieur. Cette nouvelle méthode ainsi que ses avantages seront décrits dans leurs détails dans la description qui va suivre ainsi que dans les exemples, figures et revendications. D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux figures 1 à 3 jointes en annexe et dans lesquelles :
- la figure 1 est une représentation schématique des instruments pouvant bénéficier des avantages de la méthode selon la présente invention ;
- la figure 2 représente une banque de données spectrales et de caractérisation ;
- la figure 3 représente des couples de spectres selon la présente invention.

Ainsi, dans un mode d'exécution, la présente invention consiste en un procédé de détermination et/ou de prédiction d'une caractéristique CAR d'un échantillon-produit x par analyse spectrale au moyen d'un nouveau spectromètre II,
procédé **caractérisé en ce que**
1. on dispose d'analyses spectrales effectuées sur des étalons-produits E au moyen d'un premier spectromètre I pour lequel il existe au moins un modèle permettant à partir des dits étalons-produits E (et optionnellement des produits i ci-dessous) et de leur spectre obtenu au moyen du dit premier spectromètre I de déterminer et/ou prédire la dite caractéristique CAR,
2. on dispose et/ou qu'on enregistre des couples de spectres de produits i obtenus respectivement au moyen du premier spectromètre I et du nouveau spectromètre II ( SIi , SIIi ),
3. on mesure au moyen du nouveau spectromètre II le spectre de l'échantillon-produit x (spectre SIIx),
4. on détermine la(les) distance(s) entre le spectre de l'échantillon-produit x (SIIx) et le(s) spectre(s) SIIi du(des) dit(s) produit(s) i,
5. on tient compte de la(les) distance(s) déterminée(s) à l'étape précédente et du modèle du point 1 ci-dessus, et
6. on détermine et/ou prédit ainsi la caractéristique CAR de l'échantillon-produit x recherchée.

Ainsi, dans un mode d'exécution préféré, la présente invention consiste également en un procédé de détermination et/ou de prédiction d'une caractéristique CAR d'un échantillon-produit x par analyse spectrale au moyen d'un nouveau spectromètre II,
procédé **caractérisé en ce que**
1. on dispose d'analyses spectrales effectuées sur des étalons-produits E au moyen d'un premier spectromètre I pour lequel il existe au moins un modèle permettant à partir des dits étalons-produits E (et optionnellement des produits i ci-dessous) et de leur spectre obtenu au moyen du dit premier spectromètre I de déterminer et/ou prédire la dite caractéristique CAR,
2. on dispose et/ou qu'on enregistre des couples de spectres de produits i obtenus respectivement au moyen du premier spectromètre I et du nouveau spectromètre II ( SIi , SIIi ),
3. on mesure au moyen du nouveau spectromètre II le spectre de l'échantillon-produit x (spectre SIIx),
4. on détermine au moyen d'une méthode d'analyse par voisinage la fonction permettant de corréler le spectre de l'échantillon-produit x (SIIx) aux spectres SIIi,
5. on remplace dans la dite fonction les valeurs de grandeurs spectrales SIIi par les valeurs de grandeurs spectrales correspondantes SIi des couples spectraux et qu'on détermine ainsi un spectre SIx, et
6. qu'on applique au spectre SIx le modèle du point 1 ci-dessus de manière à déterminer et/ou prédire la caractéristique CAR de l'échantillon-produit x recherchée.

En fait, dans ce mode d'exécution préféré, la présente invention consiste en la transformation du spectre SIIx obtenu au moyen du nouveau spectromètre II en un spectre SIx, le dit spectre SIx devenant ainsi exploitable au moyen du(des) modèle(s) déjà disponible(s) pour le premier spectromètre I.
Cette nouvelle méthodologie a permis d'optimiser et de faciliter la mise en service de nouveaux spectromètres tout en bénéficiant de la connaissance préalablement acquise sur d'autres spectromètres et ceci sans devoir mettre en oeuvre les techniques de régressions mathématiques très lourdes de l'art antérieur.

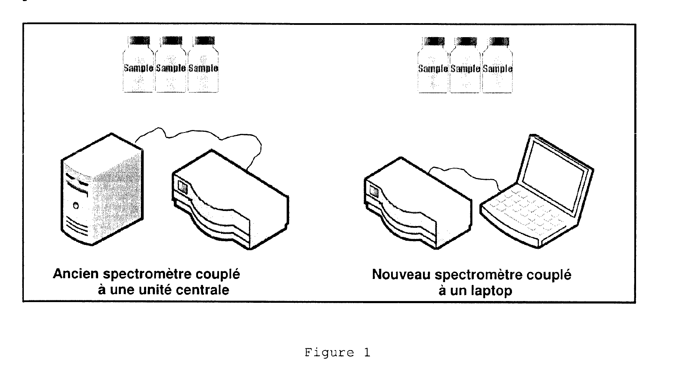

La figure 1 est une représentation schématique des instruments pouvant bénéficier des avantages de la méthode selon la présente invention. On peut y voir un premier spectromètre couplé à une unité centrale informatique ainsi qu'un deuxième spectromètre qui est lui couplé à un ordinateur portable (et/ou une installation en ligne).

Un avantage considérable du procédé selon la présente invention par rapport aux techniques développées dans l'art antérieur consiste en ce qu'il n'est pas nécessaire de disposer de nouvelles fonctions de corrélation entre les caractéristiques du nouveau produit et son spectre SIIx. En fait, on exploite la connaissance préalablement acquise sur un autre spectromètre.

Un autre avantage important du procédé selon la présente invention par rapport aux techniques développées dans l'art antérieur consiste en ce qu'il suffit de disposer d'un nombre limité de spectres de produits i obtenus à la fois au moyen du nouveau spectromètre II et au moyen du spectromètre I. Ce nombre limité de couples de spectres de produits i (SIi, SIIi) est généralement dicté par le client et/ou l'utilisateur final, désireux d'utiliser des méthodes de contrôle réactives et fiables tout en limitant la nécessité de devoir disposer au préalable d'une grande quantité d'étalons.
Une caractéristique du procédé selon la présente invention est qu'il permet donc de s'affranchir du besoin dicté par l'art antérieur de disposer d'un nombre très important d'étalons. Par exemple, la présente invention permet de caractériser un produit échantillon à partir d'un nombre de couples de spectres de produits i (SIi, SIIi) disponibles inférieur à 100, ou même inférieur à 60, par exemple inférieur à 50. Des résultats très probants ont pu être obtenus au moyen de la présente invention à partir de moins de 40 couples de spectres de produits i (SIi, SIIi) disponibles, ou même moins de 30, par exemple moins de 20 couples de spectres disponibles. Un minimum de 5 couples de spectres de produits i (SIi, SIIi) disponibles est toutefois préféré même si la présente invention a déjà été utilisée avec succès avec un minimum de 3 couples de spectres de produits i (SIi, SIIi) disponibles.

La présente invention peut avantageusement s'appliquer à tous les types de spectroscopie, par exemple, de manière non limitative, la spectroscopie Raman, le domaine de l'infrarouge, de l'UV-visible ou du proche infrarouge (NIR). De préférence, la présente invention s'appliquera à la spectroscopie NIR. En effet, la spectroscopie NIR présente de nombreux avantages par rapport à d'autres procédés d'analyse, par exemple, dans les raffineries, les sites pétrochimiques ou chimiques ainsi que tous les domaines où la caractérisation de produits chimiques, par exemple les hydrocarbures, en particulier les carburants, et elle peut recouvrir un grand nombre d'applications répétitives avec précision, avec rapidité et en ligne. De plus, la région des NIR entre 800 et 2500 nm contient la majorité des informations moléculaires sous forme de combinaisons et d'harmoniques de vibrations polyatomiques.

Le procédé selon la présente invention est particulièrement adapté à la caractérisation d'un produit par analyse spectrale topologique, et donc plus particulièrement à la caractérisation d'un produit par analyse spectrale topologique dans le proche infrarouge (« NIR »).

La caractérisation d'un produit selon la présente invention peut consister en une détermination et/ou une prédiction de toute caractéristique chimique, physique ou physico-chimique du dit produit et/ou l'identification d'un type et/ou famille de produits.

Le procédé selon la présente invention comprend donc une étape **caractérisée en ce qu'**on dispose d'analyses spectrales effectuées sur des étalons-produits E au moyen d'un premier spectromètre I pour lequel il existe au moins un modèle permettant à partir des dits étalons-produits E et de leur spectre obtenu au moyen du dit premier spectromètre I de déterminer et/ou prédire la dite caractéristique CAR.

A titre illustratif et non limitatif, cette étape peut donc été caractérisée par l'établissement d'une banque de données spectrales telle que décrite dans le brevet EP0742900, de préférence une banque de données spectrales élargies comme décrite dans la demande de brevet européen 1329099.4 déposée le 30 avril 2013 par la présente Demanderesse.

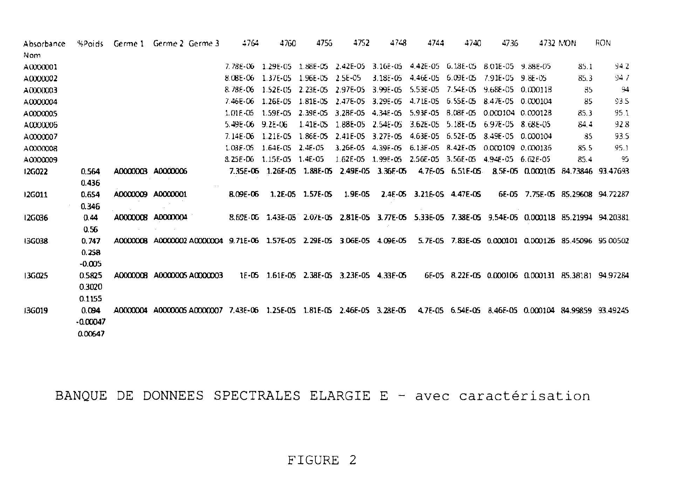

Une représentation graphique de banque de données spectrales (sous forme de tableau) est donnée à titre illustratif dans la figure 2 annexée. Ce tableau constitue une vue tronquée de la banque de données car en réalité la dite banque de données comprend une multitude de colonnes représentant les longueurs d'onde et/ou gammes de longueurs d'onde (ou à titre équivalent, les nombres d'onde ou gamme de nombres d'onde) extraites des spectres correspondants. Selon un mode d'exécution de la présente invention, le nombre de longueurs d'onde choisi peut être de 2 à 2000, par exemple de 3 à 1000, de 5 à 200 ou de 40 à 80.

Les longueurs d'onde choisies peuvent être à des intervalles réguliers tels que 1 à 50 nm ou tous les 10 à 50 nm ou tous les 15 à 35 nm ou tous les 1 à 5 nm ou tous les nanomètres ; ou elles peuvent être à des intervalles irréguliers, par exemple à des intervalles de 1 à 200 nm, par exemple de 1 à 100 ou de 1 à 50 en particulier de 2 à 50 ou de 4 à 50 ou de 10 à 60 nm, qui peuvent être choisis ou aléatoires en raison d'une variation de la forme de la courbe spectrale à cette longueur d'onde par exemple, un pic, une vallée ou un épaulement ou bien choisis avec des critères chimiques ou statistiques tels que l'analyse factorielle. Les longueurs d'onde peuvent être dans la région des 600 à 20000 nm, par exemple de 625 à 2600 nm, par exemple de 800 à 2600 nm, en particulier de 1500 à 2600 ou de 2000 à 2550 nm. Les nombres d'ondes peuvent être dans la région des 16600 à 500, par exemple de 16000 à 3840 cm-1, par exemple de 12500 à 3840 cm-1 en particulier de 6660 à 3840 ou de 5000 à 3900 cm-1; les fréquences correspondantes en Hertz peuvent être obtenues en multipliant ces longueurs d'onde par 3x10(exp)10 cm/s.

Avant de pouvoir déterminer et/ou prédire une
caractéristique/propriété CAR d'un échantillon, il faut bien évidemment mesurer les valeurs de la dite propriété pour un nombre suffisant d'étalons-produits E. Ainsi, selon un mode d'exécution de la présente invention, les propriétés chimiques, physiques et/ou physico-chimiques des étalons-produits E sont déterminées au moyen de techniques d'analyses conventionnelles. A titre d'exemple non limitatif des techniques d'analyse conventionnelle, on citera la chromatographie en phase gazeuse pour les compositions chimiques. Bien qu'il aille de soi que les étalons soient choisis pour couvrir la gamme dans laquelle on doit utiliser la méthode, la présente invention permet dans un mode d'exécution préféré de travailler avec un nombre limité d'étalons grâce à la méthodologie d'élargissement de la banque de données spectrales susmentionnée telle que décrite dans la demande de brevet européen 1329099.4 déposée le 30 avril 2013 par la présente demanderesse et qui est incorporée par référence.

Ainsi, dans la présente invention, on rajoute à la banque de données spectrales les valeurs des propriétés désirées mesurées pour les dits étalons. On aboutit ainsi à une banque de données spectrales constituée d'un nombre de points auxquels sont associées les propriétés désirées. Un exemple de réalisation (vue tronquée) est donc donné dans la figure 2.

Il s'agit à titre d'illustration d'une banque de données spectrales élargie E constituée d'étalons (A) et d'intergermes (IG) tels que définis dans la demande de brevet européen 1329099.4. Le dit tableau a été complété au moyen des caractéristiques des produits cibles recherchées, à savoir dans cet exemple les valeurs RON et MON (l'indice d'octane de recherche (RON) et l'indice d'octane de moteur (MON)). Ces caractéristiques ont donc été mesurées pour les étalons et calculées pour les intergermes.

Afin de décrire au moins un mode de réalisation d'obtention et d'utilisation de modèle permettant à partir d'un nouveau spectre et des spectres des étalons-produits E pour déterminer et/ou prédire une caractéristique/propriété de produit, nous allons nous baser sur la description qui en est faite dans le brevet EP07422900 et qui est incorporé par référence. Ainsi, dans la description de EP0742900, on compare ensuite les signaux, par exemple les absorptions (ou leurs dérivées) du nouveau spectre, avec des signaux, par exemple les absorptions (ou leurs dérivées) à la même longueur d'onde des étalons-produits E, et on choisit les étalons ayant les différences les plus petites. Ensuite, on fait la moyenne des propriétés de ces étalons choisis pour déterminer la caractéristique/propriété de l'échantillon inconnu.

Selon un mode d'exécution préféré de la présente invention, cette comparaison de signaux ne s'effectue pas sur l'entièreté de la banque de données spectrales mais uniquement sur la partie de banque de données spectrales représentative d'un sous-groupe homogène qui est préférentiellement représentatif de la propriété/caractéristique recherchée ; cette méthode de discrimination est en particulier décrite dans la demande de brevet européen 1329099.4 qui est incorporée par référence.

Ensuite, on compare les signaux, par exemple les absorptions (ou leurs dérivées ou toute autre valeur de grandeur spectrale) du nouveau spectre, avec les mêmes signaux et à la même longueur d'onde des étalons appartenant au même groupe ou sous-groupe homogène, et on choisit dans la banque de données spectrales les étalons ayant les différences les plus petites.

Quelle que soit la méthode utilisée, nous appellerons par la suite les points proches du nouveau spectre les points « proches voisins ». Ensuite, on peut par exemple faire la moyenne des propriétés de ces étalons pour déterminer la caractéristique recherchée (propriété) de l'échantillon correspondant au nouveau spectre.

Selon un mode d'exécution particulier de la présente invention, les proches voisins choisis sont ceux ayant les plus petites valeurs moyennes de la différence absolue à chaque longueur d'onde i entre la valeur de grandeur spectrale (représentée à titre d'exemple par l'absorbance ou une dérivée de celle-ci) Wix pour le produit cible (échantillon / échantillon correspondant au nouveau spectre) et le signal correspondant Wim pour le proche voisin. Les moyennes peuvent se rapporter par exemple à la valeur moyenne de Wix-Wim (quel que soit son signe, à savoir une différence absolue), ou de (Wix-Wim)exp2. Pour chaque proche voisin dans la banque de données spectrales pour le type de produit en question, on trouve la différence moyenne telle que décrite et on choisit le proche voisin ayant les différences moyennes les plus petites, à savoir au moins 1 mais de préférence 2, jusqu'à 1000 des plus petites par exemple 2 à 100 ou 2 à 20 mais en particulier 2 à 10 et surtout 2 à 6 des plus petites. Cette sélection des plus proches voisins peut être effectuée selon toute méthode connue, par exemple on peut utiliser de manière avantageuse les méthodes décrites dans la description du brevet EP0742900 (par exemple en déterminant l'indice de proximité). Selon un mode d'exécution particulier de la présente invention, le nombre de proches voisins peut être égal à 1, de préférence supérieur ou égal à 2, encore de préférence supérieur ou égal à 3. Selon un mode d'exécution de la présente invention, le nombre de proches voisins est inférieur ou égal à 50, par exemple inférieur ou égal à 20, ou même inférieur ou égal à 10.

Comme indiqué préalablement, à partir du moment où on a sélectionné les points « proches voisins », on peut facilement faire la moyenne des propriétés de ces proches voisins sélectionnés pour déterminer la propriété d'un échantillon auquel correspond un nouveau spectre. Toutefois, et ceci constitue un mode préféré d'exécution de la présente invention, la Demanderesse a découvert (comme décrit dans la demande de brevet européen 13290098.6 déposée le 30 avril 2013 et incorporée ici par référence) une amélioration significative de la précision et robustesse de sa méthode lors de la détermination de la caractéristique recherchée (par exemple, une propriété) d'un produit correspondant à un nouveau spectre lorsqu'on effectue une moyenne pondérée des propriétés de ces points « proches voisins » (qu'ils soient étalons et/ou intergermes et/ou extragermes et/ou pôles), la dite pondération étant une fonction inversement proportionnelle linéaire ou non-linéaire à la distance entre l'échantillon (« le produit cible ») et les points « proches voisins » sélectionnés.

Ainsi, selon la présente invention, on dispose d'analyses spectrales effectuées sur des étalons-produits E au moyen d'un premier spectromètre I pour lequel il existe au moins un modèle permettant à partir des dits étalons-produits E et de leur spectre obtenu au moyen du dit premier spectromètre I de déterminer et/ou prédire la dite caractéristique CAR.

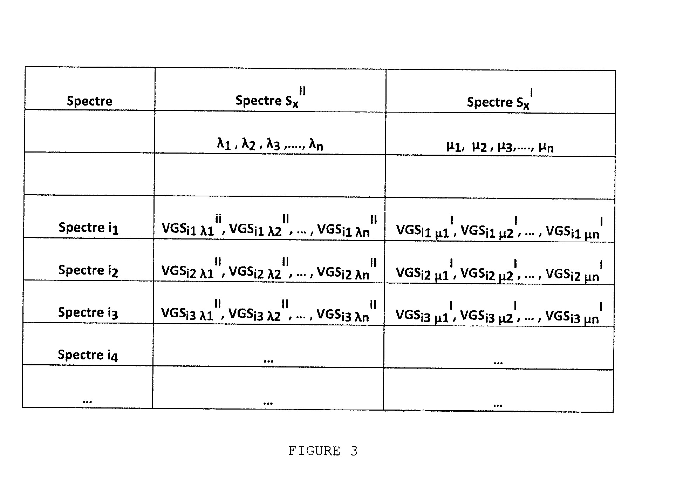

Le procédé selon la présente invention comprend donc aussi une étape **caractérisée en ce qu'**on dispose et/ou qu'on enregistre des couples de spectres de produits i obtenus respectivement au moyen du premier spectromètre I et du nouveau spectromètre II ( SIi , SIIi ).
Les spectres SIIi sont donc les spectres des produits i mesurés au moyen du nouveau spectromètre II et les spectres SIi sont donc les spectres des produits i mesurés au moyen du premier spectromètre I. Dans un mode d'exécution de la présente invention, à partir de ces spectres SIIi et SIi, on établit un tableau dont un exemple de représentation est donné dans la figure 3 à titre illustratif et non limitatif. Ainsi, dans le tableau de la figure 3, on peut apercevoir
- dans la première colonne les références permettant d'identifier les noms des spectres des produits i,
- dans la deuxième colonne - deuxième ligne - la valeur des longueurs d'onde et/ou gammes de longueurs d'onde (ou à titre équivalent, les nombres d'onde ou gamme de nombres d'onde) établies à partir du nouveau spectromètre (II),
- dans la deuxième colonne - à partir de la troisième ligne - les valeurs des grandeurs spectrales (par exemple les absorptions, ou leurs dérivées, ou toute autre valeur représentative de grandeur spectrale) qui correspondent au couple « référence produit i / longueur d'onde » établies à partir du nouveau spectromètre (II),
- dans la troisième colonne - deuxième ligne - la valeur des longueurs d'onde et/ou gammes de longueurs d'onde (ou à titre équivalent, les nombres d'onde ou gamme de nombres d'onde) établies à partir du premier spectromètre (I),
- dans la troisième colonne - à partir de la troisième ligne - les valeurs des grandeurs spectrales (par exemple les absorptions, ou leurs dérivées, ou toute autre valeur représentative de grandeur spectrale) qui correspondent au couple « référence produit i / longueur d'onde » établies à partir du premier spectromètre (I).

Les grandeurs spectrales peuvent donc être tous types de signaux caractérisant les spectres, par exemple les absorbances, transmittances, réflectance, etc... ; les absorbances ou densités optiques étant les signaux les plus communément utilisés. A titre d'exemple, on citera également comme signaux les dérivées des absorbances ou encore tout autre mesure résultant d'un autre type de traitement mathématique des dites absorbances (comme par exemple les transformations de Fourier).

Le procédé selon la présente invention comprend donc aussi une étape additionnelle **caractérisée en ce qu'**on mesure au moyen du nouveau spectromètre II le spectre de l'échantillon-produit x (spectre SIIx). Cette mesure s'effectue exactement de la même manière que la mesure effectuée lors de l'étape précédente dans le nouveau spectromètre. En ce qui concerne le dit nouveau spectromètre, on ne dispose donc à ce stade que de spectres II (SII) des produits i et de l'échantillon-produit x.

Bien que ceci ne constitue pas un mode d'exécution préféré de la présente invention, on pourrait également lors de cette étape effectuer la mesure de caractéristique/propriété des produits i et les intégrer dans la banque de données spectrales de la première étape ; cela permettrait ainsi d'intégrer dans le modèle les données relatives à ces produits i. Toutefois, et ceci constitue un mode d'exécution préféré de la présente invention, aucune caractéristique/propriété des produits i n'est mesurée ; la présente invention se limitant donc aux mesures spectrales telles que décrites ci-dessus.

Le procédé selon la présente invention comprend donc aussi une étape additionnelle **caractérisée en ce qu'**on détermine la(les) distance(s) entre le spectre de l'échantillon-produit x (SIIx) et le(s) spectre(s) SIIi du(des) dit(s) produit(s) i. Selon un mode d'exécution préféré cette distance peut avantageusement être déterminée par une méthode d'analyse par voisinage ce qui permet d'établir une fonction qui corrèle le spectre de l'échantillon-produit x (SIIx) au(x) spectre(s) SIIi. La mesure de distance peut s'effectuer par rapport à tous les spectres de produits i ; toutefois, et ceci représente un mode d'exécution préféré de la présente invention, la dite mesure de distance ne s'effectue que par rapport aux spectres de produits i considérés comme « proches voisins » dans le référentiel du nouveau spectromètre II (les points i proches de l'échantillon-produit x). Selon un mode d'exécution particulier de la présente invention, le nombre de proches voisins peut être égal à 1, de préférence supérieur ou égal à 2, encore de préférence supérieur ou égal à 3. Comme l'objectif de la présente invention est de permettre une utilisation/calibration rapide du nouveau spectromètre en effectuant un nombre restreint d'analyses spectrales sur le nouveau spectromètre, le nombre de proches voisins sera inférieur ou égal au nombre total de produits i (tel que décrit préalablement), de préférence inférieur ou égal à la moitié du nombre total de produits i.

Le procédé selon la présente invention comprend donc aussi deux étapes additionnelles caractérisées en ce
- qu'on tient compte de la(les) distance(s) déterminée(s) à l'étape précédente et du modèle du point 1 ci-dessus, et
- qu'on détermine et/ou prédit ainsi la caractéristique CAR de l'échantillon-produit x recherchée.

Selon un mode d'exécution préféré ces deux étapes additionnelles consistent
- à remplacer dans la fonction de l'étape précédente les valeurs de grandeurs spectrales SIIi par les valeurs de grandeurs spectrales correspondantes SIi des couples spectraux déterminer ainsi un spectre SIx, et
- à appliquer au spectre SIx le modèle du point 1 ci-dessus de manière à déterminer et/ou prédire la caractéristique CAR de l'échantillon-produit x recherchée.

Il n'y a pas d'exigence critique en matière de sélection des étalons-produits E et/ou des produits i.

Toutefois, les dits étalons-produits E et/ou produits i représentent de préférence toutes les familles de produits susceptibles d'être analysés au moyen du spectromètre I et/ou II. Ils peuvent donc être sélectionnés parmi les dites familles de produits susceptibles d'être analysés au moyen du spectromètre I et/ou II ; et/ou parmi des composants (par exemple des produits purs) des dits produits et/ou parmi des combinaisons des dits composants.

Il est également évident que le choix et/ou la sélection des dits étalons-produits E et/ou produits i peut évoluer au cours du temps en fonction de nouveaux types de familles de produits susceptibles d'être analysés au moyen du spectromètre I et/ou II.

A titre d'exemple, les produits i seront sélectionnés de manière a couvrir le maximum d'enveloppes spectrales pertinentes ; ils peuvent par exemple être un sous-ensemble spectral des étalons-produits E et/ou des échantillons-produits x.

La caractérisation d'un produit selon la présente invention peut donc consister en une détermination et/ou une prédiction de toute caractéristique chimique, physique ou physico-chimique du dit produit et/ou l'identification d'un type et/ou famille de produits.

On peut par exemple déterminer la présence de composés chimiques individuels au sein d'une composition ainsi que leurs concentrations ; on peut également déterminer toute sorte de propriété dont certaines sont exemplifiées ci-après.

Ainsi on peut utiliser la méthode pour la détermination de caractéristiques de produits provenant de l'industrie agroalimentaire, par exemple les eaux, les alcools, les laits, les huiles, en particulier les huiles d'olives.

On peut également avantageusement utiliser la méthode pour la détermination physico-chimique ou la prédiction en ce qui concerne au moins une charge d'alimentation ou un produit utilisé dans un processus industriel du raffinage du pétrole et/ou dans des opérations pétrochimiques ou obtenu à l'aide de ceux-ci. Le processus peut être une conversion d'hydrocarbure ou un processus de séparation, de préférence un processus de reformage ou de craquage catalytique ou d'hydrotraitement ou de distillation ou mélange. En particulier, on peut l'utiliser pour déterminer au moins une propriété d'une charge d'alimentation et/ou la prédiction et/ou la détermination d'au moins une propriété et/ou un rendement d'un produit provenant d'un certain nombre de processus différents tels que des processus pour séparer des produits pétroliers tels que la distillation atmosphérique, la distillation sous vide ou la séparation par distillation, sous une pression supérieure à la pression atmosphérique, ainsi que la conversion thermique ou catalytique, sans ou avec hydrogénation partielle ou totale, d'un produit pétrolier, telle que le craquage catalytique par exemple le craquage catalytique de fluide (FCC) , l'hydrocraquage, le reformage, l'isomérisation, l'hydrogénation sélective, la viscoréduction ou l'alkylation.

L'utilisation de la méthode dans des opérations de mélange impliquant la production et/ou la détermination d'au moins une propriété d'un mélange d'hydrocarbures liquides (éventuellement avec d'autres additifs tels que des éthers alkyliques) est d'une valeur particulière, cette méthode comprenant ou non la détermination pour chaque constituant du mélange d'un indice de mélange pour la propriété envisagée. Dans cette méthode telle qu'appliquée au mélange, on peut obtenir simplement par calcul les indices de mélange et sans avoir besoin de préparer des mélanges physiques d'étalons autres que ceux contenus dans la base de données. On peut combiner linéairement ou non linéairement les indices de mélange dans les domaines de stabilité afin de déterminer à partir de la valeur de cette combinaison, une valeur pour au moins une propriété du mélange obtenu. On peut réaliser le mélange en mélangeant au moins deux composés parmi le butane, l'essence vapocraquée hydrogénée, l'isomérat, le reformat, MTBE ou TAME, l'essence dérivée par FCC. On peut répéter ce processus en ajoutant numériquement les autres constituants séparément à la base d'hydrocarbure liquide pour déterminer une série d'indices de mélange et ensuite déterminer à partir de ces indices les propriétés du mélange multi-constituants.

Des exemples de propriétés que l'on peut déterminer et/ou prévoir sont les suivants: pour les carburants/essences d'automobiles, au moins l'un parmi l'indice d'octane de recherche (RON), l'indice d'octane de moteur (MON) et/ou leur moyenne arithmétique, avec ou sans additif au plomb et/ou la teneur en éther méthyl-t-butylique ou en éther methylisoamylique et/ou en benzène.

Pour les carburants/essences d'automobiles, au moins l'un parmi la tension de vapeur, la masse volumique, la volatilité, la courbe de distillation, par exemple le pourcentage distillé à 70°C et/ou à 100°C, la teneur en oxygène ou la teneur en benzène ou en soufre, la composition chimique et/ou la teneur en gomme par exemple exprimée en mg/100 ml et/ou la sensibilité au plomb (on détermine en particulier ces propriétés pour les utiliser dans les opérations de mélange).

Pour les carburants diesel ou gazole, au moins l'un parmi l'indice de cétane (par exemple, mesure au niveau du moteur), 1'indice de cétane calculé, le point de trouble, le "point de décharge", l'aptitude au filtrage, la courbe de distillation, la masse volumique par exemple à 15°C, le point éclair, la viscosité par exemple à 40°C, la composition chimique, la sensibilité aux additifs et le pourcentage de soufre.

Pour les produits de distillation provenant du pétrole brut par exemple sous pression atmosphérique, au moins l'un parmi la masse volumique, le pourcentage de soufre, la viscosité à 100°C, la courbe de distillation, la teneur en paraffine, la teneur résiduelle en carbone ou la teneur en carbone de Conradson, la teneur en naphte, le point éclair de l'huile, le point de trouble pour le gazole, par exemple le gazole léger et/ou la viscosité à 100°C et/ou la teneur en soufre pour les résidus atmosphériques et le rendement pour au moins une des coupes, l'essence (Eb. 38 à 95°C), le benzène (Eb. 95 à 149°C), le naphta (Eb. 149 a 175 C), le kérosène (Eb. 175 à 232°C), le gazole léger (Eb. 232 à 342°C), le gazole lourd (Eb. 342 à 369°C) et celui du résidu atmosphérique supérieur à 369°C.

Pour au moins l'un parmi une charge d'alimentation ou un produit d'un processus de craquage catalytique par exemple un processus FCC, au moins l'un parmi la masse volumique, le pourcentage en soufre, le point d'aniline, l'indice de gazole, l'indice d'essence, la viscosité à 100°C, l'indice de réfraction à 20°C et/ou à 60°C, la masse moléculaire, la température de distillation par exemple la température de distillation à 50%, le pourcentage en carbone aromatique, la teneur totale en azote et les facteurs caractérisant l'aptitude de la charge d'alimentation au craquage par exemple le KUOP, le facteur de craquabilite, le facteur de cokabilite, et le rendement par exemple en gaz, en essence, en gazole ou en résidu. Ainsi on peut déterminer les rendements et/ou les propriétés des différents produits obtenus par la distillation de produits craques tels que RON et/ou MON, sans additif antidétonant ou plombes pour la coupe d'essence et la viscosité à 100°C pour le résidu de distillation.

Pour au moins l'un parmi un produit ou une charge d'alimentation d'un processus de reformage catalytique, au moins l'un parmi la masse volumique, la température de distillation et/ou la composition chimique (exprimée en pourcentage) des hydrocarbures satures linéaires, des isoparaffines, des naphtènes, des substances aromatiques et des oléfines.

Pour au moins l'un parmi un produit ou une charge d'alimentation d'un processus d'hydrogénation d'essence, au moins l'un parmi la masse volumique, la température de distillation, RON et/ou MON, la tension de vapeur d'essence sans additif antidétonant ou plombée, la volatilité, la composition chimique (exprimée en pourcentage), en hydrocarbures saturés linéaires, en isoparaffines, en naphtènes, en substances aromatiques par exemple le benzène et les benzènes mono/di-substitues, en oléfines par exemple les oléfines cycliques et non cycliques, en dioléfines, et l'indice d'anhydride maléique.

## Revendications

1. Procédé de détermination et/ou de prédiction d'une caractéristique CAR d'un échantillon-produit x par analyse spectrale au moyen d'un nouveau spectromètre II,
procédé **caractérisé en ce que**
1. on dispose d'analyses spectrales effectuées sur des étalons-produits E au moyen d'un premier spectromètre I pour lequel il existe au moins un modèle permettant à partir des dits étalons-produits E (et optionnellement des produits i ci-dessous) et de leur spectre obtenu au moyen du dit premier spectromètre I de déterminer et/ou prédire la dite caractéristique CAR,
2. on dispose et/ou qu'on enregistre des couples de spectres de produits i obtenus respectivement au moyen du premier spectromètre I et du nouveau spectromètre II ( SIi , SIIi ),
3. on mesure au moyen du nouveau spectromètre II le spectre de l'échantillon-produit x (spectre SIIx),
4. on détermine la(les) distance(s) entre le spectre de l'échantillon-produit x (SIIx) et le(s) spectre(s) SIIi du(des) dit(s) produit(s) i,
5. on tient compte de la(les) distance(s) déterminée(s) à l'étape précédente et du modèle de l'étape 1 ci-dessus, et
6. on détermine et/ou prédit ainsi la caractéristique CAR de l'échantillon-produit x recherchée.

2. Procédé de détermination et/ou de prédiction d'une caractéristique CAR d'un échantillon-produit x par analyse spectrale au moyen d'un nouveau spectromètre II,
procédé **caractérisé en ce que**
1. on dispose d'analyses spectrales effectuées sur des étalons-produits E au moyen d'un premier spectromètre I pour lequel il existe au moins un modèle permettant à partir des dits étalons-produits E (et optionnellement des produits i ci-dessous) et de leur spectre obtenu au moyen du dit premier spectromètre I de déterminer et/ou prédire la dite caractéristique CAR,
2. on dispose et/ou qu'on enregistre des couples de spectres de produits i obtenus respectivement au moyen du premier spectromètre I et du nouveau spectromètre II ( SIi , SIIi ),
3. on mesure au moyen du nouveau spectromètre II le spectre de l'échantillon-produit x (spectre SIIx),
4. on détermine au moyen d'une méthode d'analyse par voisinage la fonction permettant de corréler le spectre de l'échantillon-produit x (SIIx) aux spectres SIIi,
5. on remplace dans la dite fonction les valeurs de grandeurs spectrales SIIi par les valeurs de grandeurs spectrales correspondantes SIi des couples spectraux et qu'on détermine ainsi un spectre SIx, et
6. qu'on applique au spectre SIx le modèle de l'étape 1 ci-dessus de manière à déterminer et/ou prédire la caractéristique CAR de l'échantillon-produit x recherchée.

3. Procédé selon l'une quelconque des revendications précédentes **caractérisé en ce que** le nombre de couples de spectres de produits i (SIi, SIIi) disponibles est inférieur à 100, ou même inférieur à 60, par exemple inférieur à 50.

4. Procédé selon l'une quelconque des revendications précédentes **caractérisé en ce que** l'étape 4 des revendications 1 et 2 est effectuée sur un nombre de produits i inférieur ou égal à la moitié du nombre total de produits i disponibles de l'étape 2.

5. Procédé selon l'une quelconque des revendications précédentes **caractérisé en ce que** la caractérisation des produits est effectuée par analyse spectrale topologique, de préférence par analyse spectrale topologique dans le domaine du proche infrarouge (« NIR ») .
